# EUROPÄISCHE PATENTSCHRIFT

(11) **EP 0 851 842 B1**
(45) Veröffentlichungstag und Bekanntmachung des Hinweises auf die Patenterteilung: **15.09.1999**
(21) Anmeldenummer: 96928420.7
(22) Anmeldetag: 07.08.1996
(51) Int. Cl.: C02F 1/72

(54) **VERFAHREN ZUR DESINFEKTION WÄSSRIGER LÖSUNGEN**
PROCESS FOR DISINFECTING AQUEOUS SOLUTIONS
PROCEDE POUR LA DESINFECTION DE SOLUTIONS AQUEUSES

(30) Priorität: 25.08.1995 DE 19531241
(43) Veröffentlichungstag der Anmeldung: 08.07.1998
(73) Patentinhaber: Degussa-Hüls Aktiengesellschaft, 60287 Frankfurt am Main (DE)
(72) Erfinder: HUSS, Michael, D-65760 Eschborn (DE); SCHNEIDER, Roland, D-63594 Hasselroth (DE); DEL GROSSO, Birgit, D-63579 Freigericht (DE)
(86) Internationale Anmeldenummer: EP9603485
(87) Internationale Veröffentlichungsnummer: WO9708100

(56) Entgegenhaltungen:
- WO-A-93/02973
- US-A- 5 393 781

## Beschreibung

Die Erfindung richtet sich auf ein Verfahren zur Desinfektion wäßriger Lösungen durch Verwendung eines Peressigsäure (PES) und Wasserstoffperoxid (H₂O₂) enthaltenden Desinfektionsmittels, wobei erfindungsgemäß außer einer wirksamen Keimreduzierung eine Verzögerung einer Wiederverkeimung erzielt wird.

Zur Behandlung von wäßrigen Lösungen, insbesondere kommunalen Abwässern, Oberflächenwässern und industriellen Kreislauf- und Abwässern, die Mikroorganismen enthalten, welche aus hygienischen, betrieblichen oder Umweltgründen nicht unbehandelt abgelassen werden können, sind wirksame Desinfektionsverfahren nötig. Wirksame Desinfektionsverfahren, die gleichzeitig umweltverträglich sind, basieren auf der Verwendung von Aktivsauerstoffverbindungen, wie insbesondere Wasserstoffperoxid, und niederen Percarbonsäuren, insbesondere Peressigsäure, als Desinfektionsmittel.

Der Konferenzbericht von J.A.L. Fraser et al. auf der Desinfection of Water Conference vom 22.01.1992, London (SCI Water and Environment Group) vermittelt eine vergleichende Übersicht über die bioziden Eigenschaften, die Handhabung und Verwendung von Wasserstoffperoxid und Peressigsäure in unterschiedlichen Anwendungsgebieten:

Wasserstoffperoxid ist ein mäßrig wirkendes, mildes Desinfektionsmittel mit bakteriostatischen Eigenschaften. Während H₂O₂-Konzentrationen von 25 mg/l zwar das Wachstum einiger Bakterien hemmen, erfordert ein wirksames Absenken der Keimzahl selbst bei viel höherer H₂O₂-Konzentration viele Stunden oder eine zusätzliche UV-Bestrahlung.

Derartige Maßnahmen sind im Falle der Desinfektion großer Wassermengen, etwa zur Behandlung von Wasser in Klärwerken und deren Abgängen, unzureichend und zudem unwirtschaftlich.

Peressigsäure ist ein hochwirksames Desinfektionsmittel, dessen Verwendung eine rasche Keimreduktion ermöglicht. Demgemäß wird Peressigsäure zur Sterilisierung in der Lebensmittelindustrie und Flaschen- und Krankenhaus-Desinfektion eingesetzt. Peressigsäure wird bisher zur Wasserbehandlung nicht oder untergeordnet eingesetzt. Derartige Lösungen enthalten herstellungsbedingt außer der Peressigsäure und Wasser noch Wasserstoffperoxid und Essigsäure sowie einen oder mehrere Stabilisatoren; die Konzentration an Peressigsäure (PES) und Wasserstoffperoxid (H₂O₂) sowie das Molverhältnis PES zu H₂O₂ kann in weiten Bereichen liegen.

Handelsübliche, im zitierten Konferenzbericht beschriebene Peressigsäurelösungen enthalten 15 Gew.-% PES, 14 Gew.-% H₂O₂ und 28 Gew.-% Essigsäure bzw. 38 Gew.-% PES, 4 Gew.-% H₂O₂ und 44,7 Gew.-% Essigsäure. Die Verwendung derart hochkonzentrierter Peressigsäurelösungen bereitet wegen ihrer ätzenden und brandfördernden Eigenschaften Handhabungs-, Lager-, Werkstoff- und Transportprobleme. Der überproportional hohe Essigsäuregehalt führt zudem zu einer Erhöhung des chemischen Sauerstoffbedarfs (CSB) des zu behandelnden Wassers. Wesentlich problematischer ist aber, daß dieser extrem hohe Anteil an frei vorhandener Essigsäure - aus der Zersetzung der Peressigsäure bildet sich zusätzlich Essigsäure - die Grundlage für eine erneute, gegebenenfalls explosionsartige Vermehrung der Keime darstellt.

Leichter handhabbare Peressigsäurelösungen mit einem niedrigeren Peressigsäuregehalt, etwa 0,5 bis 12,5 Gew.-% Peressigsäure, lassen sich durch Verdünnen konzentrierterer Lösungen mit Wasser und erforderlichen Mengen Essigsäure und/oder Wasserstoffperoxid herstellen - siehe WO 91/12058. Derartige Lösungen werden in dem genannten Dokument zu häuslichen Hygienezwecken vorgeschlagen. Eine Anregung, derart verdünnte Peressigsäurelösungen anstelle der zuvor genannten höher konzentrierten Lösungen auch zur Desinfektion großer Wassermengen zu verwenden, läßt sich diesem Dokument nicht entnehmen. Auch ergibt sich kein Hinweis darauf, für einen derartigen Zweck Lösungen mit sehr niedrigem Peressigsäuregehalt und gleichzeitig hohem H202-Gehalt zu verwenden.

Die WO 94/16110 lehrt ein Verfahren zur Desinfektion von wäßrigen Zucker- oder ähnlichen Lösungen. Hierbei kommt eine Peressigsäurelösung zum Einsatz, welche 0,5 bis 5 Gew.-%, vorzugsweise 2 bis 3 Gew.-%, Peressigsäure (PES) und Wasserstoffperoxid in einer Menge von 15 bis 50 Gew.-% enthält; das Molverhältis von H₂O₂ zu PES liegt hierbei zwischen 12 : 1 und 120 : 1, insbesondere zwischen 18 : 1 bis 54 : 1. Die Einsatzmenge beträgt bevorzugt 5 bis 50 mg PES pro 1. Das in der WO 94/16110 beschriebene Verfahren umfaßt zusätzlich die Verwendung einer Peressigsäurelösung mit kleiner als dem zuvor genannten H₂O₂ zu PES-Molverhältnis. Die Verwendung einer verdünnten Peressigsäurelösung mit dem zuvor genannten hohen H₂O₂ zu PES-Molverhältnis zu anderen Desinfektionszwecken als im Rahmen des in diesem Dokument beschriebenen Verfahrens, insbesondere zur kombinierten Desinfektion mit verzögerter Wiederverkeimung wird in diesem Dokument nicht nahegelegt.

Eine stabile, gut transportierbare Peressigsäurelösung für Desinfektionszwecke ist aus der WO 88/08667 bekannt. Diese Lösung enthält 0,2 bis 8 Gew.-% H₂O₂, insgesamt 0,2 bis 11 Gew.-% Peressigsäure und Essigsäure, ferner Stabilisatoren; das Verhältnis von H₂O₂ zur Summe der Säuren liegt zwischen 1 und 11. Derartige Lösungen zeigen eine ungenügende Wirkung bezüglich der gewünschten Verzögerung der Wiederverkeimung. Im Gegenteil: Viel Essigsäure fördert sogar die Wiederverkeimung. Nachteilig an den beispielsgemäßen Lösungen mit hohem Essigsäuregehalt bei gleichzeitig sehr niedrigem Peressigsäuregehalt ist ferner deren Geruchsintensität; bei ihrer Anwendung kommt es ferner zur Erhöhung des CSB-Wertes.

Eine weitere transportfähige tensidhaltige Peressigsäurelösung für Desinfektionszwecke mit 1 bis 6 Gew.-% PES und einem Gewichtsverhältnis von H₂O₂ zu PES im Bereich von 10 : 1 bis 1 : 10 lehrt die WO 94/14321. Die Anwendungskonzentration beträgt mindestens 5 mg PES pro 1 Wasser. Auch hier tritt die Wiederverkeimung nicht verzögert ein.

Peressigsäurelösungen nicht spezifizierter Zusammensetzung wurden gemäß Cavadore et al. in L'EAU, L'INDUSTRIE, les NUISANCES 166, 100-102 zur Behandlung von Wasser aus kommunalen Abwasseranlagen ausprobiert. Bei einer Einsatzmenge von 1 und 2 mg PES pro 1 konnte die Keimzahl coliformer Bakterien und Streptokokken stark abgebaut werden. Die eingesetzten Lösungen sollen auch einige Stunden nach der Behandlung eine bakteriostatische Wirkung gezeigt haben. Wegen der nicht spezifizierten Zusammensetzung der verwendeten Peressigsäurelösungen ist jedoch die technische Lehre nicht nachvollziehbar, da, wie zuvor dargelegt, im Stand der Technik zahlreiche, völlig unterschiedliche Zusammensetzungen für Peressigsäurelösungen bekannt sind. Da die Autoren des Dokuments der Unternehmensgruppe angehören, welche auch die im zuvor zitierten Konferenzbericht angegebenen Peressigsäurelösungen vermarktet, legt zumindest nahe, daß die marktüblichen hochkonzentrierten PES-Lösungen eingesetzt wurden.

Aufgabe der Erfindung ist daher, ein verbessertes Verfahren zur Desinfektion mit gleichzeitiger Verzögerung einer Wiederverkeimung aufzuzeigen. Zur Anwendung sollte hierbei eine sicher handhabbare und problemlos lager- und transportfähige Peressigsäurelösung kommen.

Die Aufgabe wird gelöst durch ein Verfahren zur Desinfektion von Klärwerksabgängen und industriellen Kreislauf- und Abwässern und Verzögerung einer Wiederverkeimung derselben durch Zugabe eines Peressigsäure und Wasserstoffperoxid enthaltenden Desinfektionsmittels in einer Menge von mindestens 1 mg Peressigsäure pro 1 Wasser, das dadurch gekennzeichnet ist, daß das Desinfektionsmittel 1,5 bis 2,5 Gew.-% Peressigsäure und 40 bis 60 Gew.-% Wasserstoffperoxid und Essigsäure in einer Menge von weniger als 2 Gew.-% enthält.

Gemäß einer bevorzugten Ausführungsform des Verfahrens ist das zu verwendende Desinfektionsmittel wäßrig und enthält 1,5 bis 2,5 Gew.-% Peressigsäure, 40 bis 50 Gew.-% Wasserstoffperoxid und Essigsäure in einer Menge von weniger als 1 Gew.-%.

Wenngleich eine Einsatzmenge des Desinfektionsmittels unter optimalen pH-, Temperatur- und Milieubedingungen um 1 mg Peressigsäure (PES) sein kann, wird eine Einsatzmenge von 4 bis 10 mg PES pro l Wasser bevorzugt. Soweit eine hohe Verkeimung vorliegt und/oder das zu behandelnde Wasser einen hohen Gehalt an leicht durch H₂O₂ und/oder PES oxidierbaren Stoffen enthält, etwa Schwefelwasserstoff, Sulfide und Nitrit, ist gegebenenfalls eine nenneswert größere Einsatzmenge an PES pro l Wasser erforderlich.

Überraschenderweise wurde gefunden, daß die speziellen Konzentrationsverhältnisse an Peressigsäure und Wasserstoffperoxid das erfindungsgemäß zu verwendende Desinfektionsmittel gegenüber handelsüblichen Peressigsäurelösungen, selbst gegenüber einer solchen mit etwa 5 Gew.-% PES, etwa 27 Gew.-% H₂O₂ und etwa 7 Gew.-% Essigsäure, zu einer wesentlich besseren Langzeitwirkung führen.

Unter Desinfektion wird eine Bekämpfung von Mikroorganismen aus der Reihe der Bakterien, Viren, Pilze und Algen verstanden. Hierbei wird stets eine möglichst hohe Tötungsrate bei möglichst geringer Anwendungskonzentration des Desinfektionsmittels und anwendungsorientierter Behandlungsdauer angestrebt. Zweckmäßigerweise weisen für die industrielle und kommunale Wasserbehandlung geeignete Desinfektionsmittel bei praxisüblicher Anwendungskonzentration eine Tötungsrate von über 99 %, vorzugsweise über 99,9 % auf. Mit dem erfindungsgemäß zu verwendenden Desinfektionsmittel lassen sich diese Tötungsraten gut erzielen, etwa mit einer PES-Einsatzkonzentration im Bereich von 4 bis 10 mg/l. Die optimale Einsatzkonzentration, welche außer von der Zusammensetzung des Wassers auch von dem pH-Wert und der Temperatur abhängen kann, wird der Fachmann durch Optimierungsversuche ermitteln. Bei Verwendung erfindungsgemäßer Desinfektionsmittel kommt es zudem zu einer verzögerten Wiederverkeimung des Wassers. Das Desinfektionsmittel hat somit eine Depotwirkung: Nach der Reduzierung der Keimzahl - hierfür ist primär die Peressigsäure verantwortlich - übt das Wasserstoffperoxid eine Wachstumsverzögerung, inbesondere eine bakteriostatische Wirkung aus. Hierdurch wird die Einsatzmenge des desinfizierenden Agens Peressigsäure deutlich reduziert und somit die Wirtschaftlichkeit verbessert. Durch den außerordentlich niedrigen Gehalt an Essigsäure in dem zu verwendenden Desinfektionsmittel - der Essigsäuregehalt liegt im allgemeinen signifikant unter 2 Gew.-% und bei einer Lösung mit 1,5 bis 2,5 Gew.-% PES häufig im Bereich von 0,2 bis 0,7 Gew.-% - entfällt eine bisher maßgebliche Grundlage für eine rasche Wiederverkeimung. Aufgrund der speziellen Zusammensetzung des erfindungsgemäß zu verwendenden Desinfektionsmittels wird diese Kombinationswirkung - Keimtötung und Wachstumshemmung - mit einem einzigen Mittel erzielt. Dies ist ein wichtiger anwendungstechnischer Vorteil, weil am Anwendungsort nur ein Vorratsbehälter und eine Dosiervorrichtung für das Desinfektionsmittel erforderlich sind. Die erfindungsgemäße Wachstumshemmung ist bei optimaler PES-Einsatzkonzentration bezüglich der Keimtötung derart effektiv, daß im allgemeinen die Keimzahl pro ml Wasser auch etwa 24 Stunden nach Zugabe des Desinfektionsmittels mindestens eine Zehnerpotenz unter dem Ausgangswert liegt.

Erfindungsgemäß zu verwendende Desinfektionsmittel lassen sich analog üblicher Peressigsäurelösungen durch säurekatalysierte Gleichgewichtseinstellung eines Gemischs aus Essigsäure und Wasserstoffperoxid und, soweit erforderlich, Verdünnen mit Wasser oder wäßrigem Wasserstoffperoxid erhalten - siehe beispielsweise die eingangs zitierte WO 94/16110. Während und/oder nach der Gleichgewichtseinstellung bzw. Verdünnung können Aktivsauerstoffstabilisatoren, etwa solche aus der Reihe Phosphonsäureverbindungen, Dipicolinsäure und deren Salze, Polyphosphorsäuren und deren Salze und Stannate, einzeln oder in synergistisch wirksamen Kombination in wirksamer Menge zugesetzt werden. Aufgrund der niederen PES-Konzentration der Peressigsäurelösung lassen sich derartige Lösungen leicht handhaben: Es sind lediglich solche Sicherheitsvorkehrungen zu treffen, wie sie für wäßrige Wasserstoffperoxidlösungen einer Konzentration zwischen 40 und 60 Gew.-%, bei bevorzugten Lösungen 40 bis 50 Gew.-%, üblich sind. Derartige Lösungen lassen sich auch in Edelstahl und PES-Kunststoffbehältern lagern. Ferner gelten sie als nicht mehr wassergefährdend und sind damit umweltfreundlich.

Das erfindungsgemäße Verfahren läßt sich in unterschiedlichen Bereichen anwenden. Beispielhaft werden genannt: Kreislaufwasser und Abwasser aus der Lebensmittel-, Brau- und Milchindustrie; Kreislauf- und Abwasser chemischer Verfahren, wobei die Anwesenheit oder Bildung von Keimen im Wasser ohne eine Desinfektion und Keim-Wachstumshemmung zu Problemen führt - etwa Schleim- und Geruchsbildung; Wasser und Schlämme kommunaler Klärwerke; Schwimmbadwasser. Eine weitere Anwendung des erfindungsgemäßen Verfahrens liegt im Bereich der Bodensanierung: Durch Zugabe des Desinfektionsmittels in das Wasser eines Infiltrationsbrunnens werden Mikroorganismen in unmittelbarer Nähe desselben reduziert; damit wird die biologische Zersetzung des als Sauerstoffträger anwesenden Wasserstoffperoxids verringert und eine größere Reichweite von unzersetztem Wasserstoffperoxid im Boden erreicht.

Wesentliche Vorteile des erfindungsgemäßen Verfahrens sind:
- gute und über die Einsatzmenge leicht steuerbare Desinfektionswirkung mit Verzögerung der Wiederverkeimung;
- breite Anwendbarkeit und Umweltverträglichkeit;
- viel geringerer Essigsäuregehalt als in vorbekannten PES und H₂O₂ enthaltenden Desinfektionsmitteln; damit ergeben sich bei der Anwendung geringere Geruchsprobleme; aufgrund des Fehlens einer überproportional hohen Menge Essigsäure fehlt auch die Grundlage für eine erneute, gegebenenfalls explosionsartige Vermehrung der Keime;
- leichte Verfügbarkeit und problemlose Handhabbarkeit, Lagerfähigkeit und Transportfähigkeit des Desinfektionsmittels; keine Werkstoffprobleme.

### Beispiele

Die Untersuchungen wurden an einem Kläranlagenablaufwasser (Überlaufwasser der Vorklärung der Kläranlage) durchgeführt, das eine Keimzahl von 10⁵ - 10⁶ KBE/ml aufwies (KBE = koloniebildende Einheiten).

250 ml Probenwasser wurden in einer Schottflasche in Gegenwart des entsprechenden Desinfektionsmittels bei Raumtemperatur auf einem Schüttler inkubiert. Die Desinfektionsmittel wurden in Wasser vorverdünnt und die Verdünnung sofort weiterverwendet. Als Blindwert wurde gleichzeitig ein Ansatz ohne Desinfektionsmittel inkubiert. In bestimmten zeitlichen Abständen wurde eine Probe entnommen und eine Verdünnungsreihe hergestellt. Zur Ermittlung der Gesamtzellzahl wurden die Verdünnungen je zweimal auf Standard I-Nähragar ausplattiert.

Da die Proben zu Beginn aufgrund der sehr rasch aufeinanderfolgenden Probennahme nicht sofort weiterverarbeitet (verdünnt und ausplattiert) werden konnten, wurde das restliche Peroxid bzw. die Peressigsäure zerstört. Die rasche Zersetzung von H₂O₂ wurde durch Zugabe von Katalase erreicht, die Peressigsäure wurde durch Zugabe weniger Tropfen einer 0,1 N Natriumthiosulfat-Lösung zersetzt.

Untersucht wurden folgende Desinfektionsmittel:

| | | PES | H₂O₂ | Essigsäure |
|---|---|---|---|---|
| Nr. | Mittel | Konzentration (Gew.-%) | | |
| E 1 | Peressigsäurelösung 1 (erfindungsgemäß) | 2,0 | 50,0 | 0,4 |
| | | | | |
| NE 1 | Peressigsäurelösung 2 (nicht erfindungsgemäß) | 4,9 | 26,5 | 6,5 |
| | | | | |
| NE 2 | Wasserstoffperoxid | - | 50,0 | - |

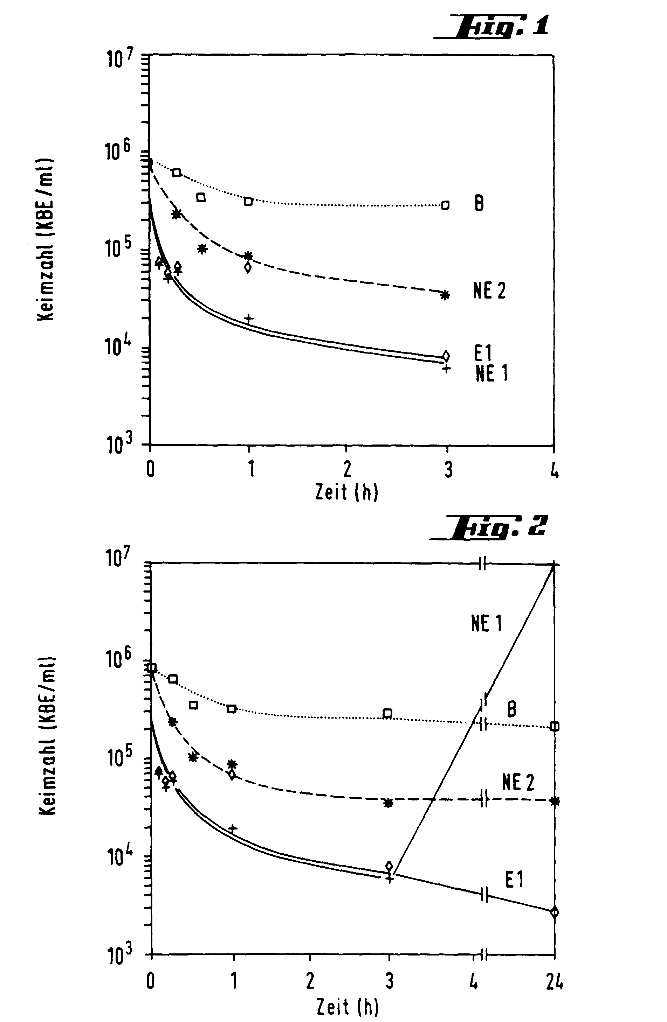

Figur 1 zeigt die desinfizierende Wirkung des erfindungsgemäßen Desinfektionsmittel "E" im Vergleich zu den nicht-erfindungsgemäßen Mitteln "NE 1" und "NE 2" sowie einer Blindprobe "B". Die Einsatzkonzentration von "E 1" betrug 6 ppm PES / 150 ppm H₂O₂, von "NE 1" 6 ppm PES / 32 ppm H₂O₂ und von "NE 2" 150 ppm H₂O₂ (ppm = parts per million). Mit "E 1" und "NE 1" konnte nach einer Einwirkungszeit von 3 Stunden (h) eine Keimreduzierung um etwa 2 Zehnerpotenzen von etwa 10⁶ auf 10⁴ KBE/ml gemessen werden. Dabei erfolgt die Abtötung von etwa 90 % der Mikroorganismen bereits innerhalb 15 Minuten. Mit "NE 2" erfolgte eine wesentlich langsamere Keimreduzierung und nach 3 h waren fünfmal mehr Keime nachweisbar als mit "E 1" und ,,NE 1".

Vergleich der Langzeitwirkung - siehe Figur 2:
Nach 24 h Inkubationszeit hatte die Keimzahl in den Ansätzen mit "NE 1" wieder zugenommen, während die desinfizierende Wirkung von ,,E 1" über 24 h anhielt und die Keimzahl sogar noch etwas abgenommen hatte. Diese Langzeitwirkung von "E 1" im Vergleich zu "NE 1" wird auf den deutlich höheren Gehalt an H₂O₂ (150 ppm H₂O₂ im Vergleich zu 32 ppm) zurückgeführt, das nach 24 h noch nicht zersetzt war. Auch im Ansatz mit H₂O₂ (= NE 2) waren die Keime nach 24 h nicht wieder hochgewachsen, sondern - auf dem höheren Niveau von ca. 5 · 10⁴ KBE/ml - konstant geblieben. Nach 48 h war die Keimzahl jedoch auch in den Ansätzen mit "E 1" und "NE 2" wieder angestiegen.

## Patentansprüche

1. Verfahren zur Desinfektion von Klärwerksabgängen und industriellen Kreislauf- und Abwässern und Verzögerung einer Wiederverkeimung derselben durch Zugabe eines Peressigsäure und Wasserstoffperoxid enthaltenden Desinfektionsmittels in einer Menge von mindestens 1 mg Peressigsäure pro l Wasser,
dadurch gekennzeichnet,
daß das Desinfektionsmittel 1,5 bis 2,5 Gew.-% Peressigsäure, 40 bis 60 Gew.-% Wasserstoffperoxid und Essigsäure in einer Menge von weniger als 2 Gew.-% enthält.

2. Verfahren nach Anspruch 1,
dadurch gekennzeichnet,
daß das Desinfektionsmittel weniger als 1 Gew.-% Essigsäure enthält.

3. Verfahren nach Anspruch 1 oder 2,
dadurch gekennzeichnet,
daß man das Desinfektionsmittel in einer Menge von 4 bis 10 mg Peressigsäure pro l Wasser zugibt.

## Claims

1. Process for disinfecting purification plant discharges and industrial circuit water and waste water and for retardation of reinfection of the latter by the addition, in a quantity of at least 1 mg peracetic acid per litre water, of a disinfectant which contains peracetic acid and hydrogen peroxide,
characterised in that
the disinfectant contains from 1.5 to 2.5 wt.% peracetic acid, from 40 to 60 wt.% hydrogen peroxide and acetic acid in a quantity of less than 2 wt.%.

2. Process according to Claim 1,
characterised in that
the disinfectant contains less than 1 wt.% acetic acid.

3. Process according to Claim 1 or 2,
characterised in that
the disinfectant is added in a quantity of from 4 to 10 mg peracetic acid per litre water.

## Revendications

1. Procédé de désinfection de sorties d'usine d'épuration et d'eaux de circuit et d'eaux usées industrielles et de retardement d'un réensemencement de celles-ci par addition d'un agent désinfectant contenant de l'acide peracétique et du peroxyde d'hydrogène, en une quantité d'au moins 1 mg d'acide peracétique par litre d'eau,
caractérisé en ce que
l'agent désinfectant contient de 1,5 à 2,5 % en poids d'acide peracétique, de 40 à 60 % en poids de peroxyde d'hydrogène et de l'acide acétique en quantité de moins de 2 % en poids.

2. Procédé selon la revendication 1,
caractérisé en ce que
l'agent désinfectant contient moins de 1 % en poids d'acide acétique.

3. Procédé selon la revendication 1 ou la revendication 2,
caractérisé en ce qu'
on verse l'agent désinfectant en une quantité de 4 à 10 mg d'acide peracétique par litre d'eau.
